# EUROPEAN PATENT APPLICATION

(11) **EP 4 838 112 A1**
(43) Date of publication of application: **11.11.2026**
(21) Application number: 26168109.2
(22) Date of filing: 09.12.2013
(51) Int. Cl.: F16H 7/10, F16H 7/12

(54) **TENSIONER AND ENDLESS DRIVE ARRANGEMENT**

(30) Priority: 07.12.2012 US 201261734443 P
(62) Document number(s) of the earlier application(s) in accordance with Art. 76 EPC: 13860580.3 / 2 929 213
(71) Applicant: Litens Automotive Partnership, Woodbridge, Ontario L4L 5T7 (CA)
(72) Inventor: Walter, Ingo, 63584 Grundau (DE); Fischer, Michael, 97778 Fellen (DE)
(74) Representative: Grünecker Patent- und Rechtsanwälte PartG mbB

(57) **Abstract**

In an aspect, a tensioner for tensioning a belt is provided, comprising a base defining a pivot axis. The tensioner further comprises first and second tensioner arms which are pivotably mounted to the base. First and second bushing arrangements support rotational movement of the first and second tensioner arms. First and second pulleys are rotatably connected to the first and second tensioner arms. A pulley hub load generated by the belt on the first pulley results in a radially directed bushing hub load at the first bushing arrangement. A tensioner arm biasing member biases the first and second tensioner arms in first and second free arm directions. At least one axial preload member biases the first tensioner arm with an axial preload. The axial preload generates a radially directed counterforce in the first bushing arrangement that is at least approximately as great as the bushing hub load.

## Description

### CROSS-REFERENCE TO RELATED APPLICATIONS

This application claims priority to and the benefit of U.S. Provisional Patent Application No. 61/734,443 filed December 7, 2012, the contents of which are incorporated herein in their entirety.

### FIELD

This disclosure relates generally to the field of tensioners for an endless drive system, and more particularly to a belt drive arrangement for a starter-generator unit which uses a V tensioner.

### BACKGROUND

An ever increasing number of engines having a starter-generator unit have been developed since the 1990s in order to improve fuel mileage. In such engines, the combustion process is stopped when the vehicle comes to rest, for example, at a stoplight. In this condition the starter-generator unit is operated as a starter motor to restart the engine. Once the engine is started, the starter-generator unit can be selectively operated as a generator to recharge the batteries.

The starter-generator unit is mechanically connected to the engine via an endless drive such as a belt or chain. The endless drive member is subject to tension fluctuations, particularly as the starter-generator unit shifts its function between starter and generator, in which case the tight side and slack side of the endless drive reverses. The endless drive tensioning system must handle this and other tension fluctuations that occur whilst the engine is operating.

Various dual arm tensioners are known in the art, example of which are found in publication numbers DE 102 53 450 A1; EP 1 464 871 A1; US 2004/0171448 A1; EP 1 122 464 A1; and DE 42 43 451 A1. However, a tensioner disclosed herein seeks to provide a more robust solution to extend the operating life of such tensioners.

### SUMMARY

In an aspect, a tensioner for tensioning an endless drive member is provided, comprising a base that is mountable to a stationary structure. The base defines a tensioner arm pivot axis. The tensioner further comprises first and second tensioner arms which are pivotably mounted to the base and which are each pivotable about the tensioner arm pivot axis. A first bushing arrangement supports rotational movement of the first tensioner arm about the axis, and a second bushing arrangement that supports rotational movement of the second tensioner arm about the axis. A first pulley is rotatably connected to the first tensioner arm for rotation about a first pulley axis, and a second pulley rotatably connected to the second tensioner arm for rotation about a second pulley axis. The first and second pulleys are configured to engage the endless drive member. A pulley hub load generated by the endless drive member on the first pulley results in a radially directed bushing hub load at the first bushing arrangement. A tensioner arm biasing member has a first end that is engaged with the first tensioner arm and a second end that is engaged with the second tensioner arm so as to bias the first and second tensioner arms in first and second free arm directions. At least one axial preload member biases the first tensioner arm with an axial preload. The axial preload generates a radially directed counterforce in the first bushing arrangement that is at least approximately as great as the bushing hub load at at least one position of the first tensioner arm.

In another aspect, an endless drive is provided, that incorporates an endless drive member and a tensioner as described above.

In yet another aspect, a tensioner is provided as described above, but which includes only the first tensioner arm and first pulley and not the second tensioner arm and the second pulley. In an embodiment according to this aspect, the second end of the tensioner arm biasing member would engage the base.

### BRIEF DESCRIPTION OF DRAWINGS

The foregoing and other aspects will be more readily appreciated having regard to the accompanying drawings, wherein:
Figure 1 is a top view of an embodiment of a tensioner having first and second tensioner arms;
Figure 2 is a schematic view of the tensioner shown in Figure 1 in a belt drive system;
Figure 3 is an exploded perspective view of the tensioner shown in Figure 1;
Figure 4 is a sectional side view of the tensioner shown in Figure 1;
Figure 5 is another sectional side view of the tensioner shown in Figure 1 illustrating forces acting on the first tensioner arm; and
Figure 6 is another sectional side view of the tensioner shown in Figure 1 illustrating forces acting on the second tensioner arm.

### DETAILED DESCRIPTION OF EMBODIMENTS

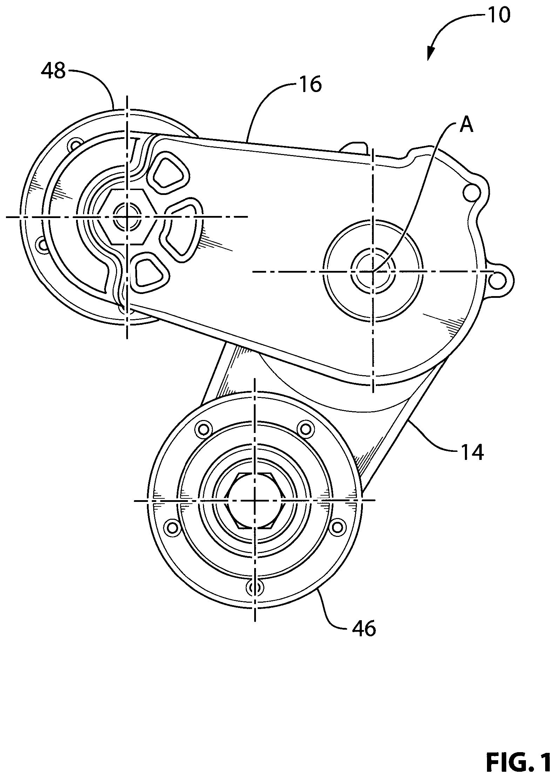

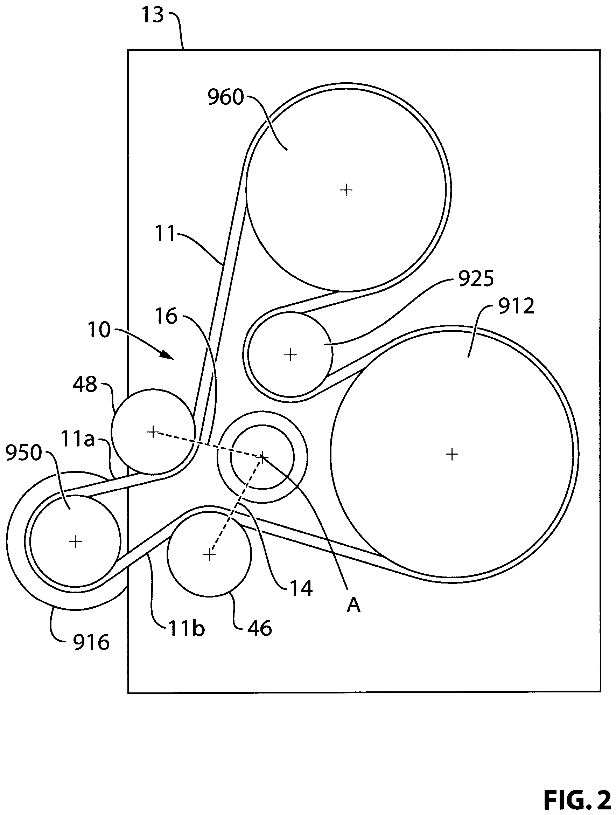

Figure 1 is a top view of an embodiment of a tensioner 10 usable for tensioning an endless drive member 11 (Figure 2). The endless drive member 11 may be for use on an engine 13 for a vehicle (not shown) and may be connected to a crankshaft pulley 912, a water pump pulley 960, a motor/generator unit pulley 950 for a motor/generator unit 916 (also referred to as an MGU 916), and an idler 925. The MGU 916 may be used for a number of purposes, including, for example, driving accessories such as the water pump or an air conditioning compressor (not shown) via the endless drive member 11 when the engine 13 is off temporarily, (e.g. when the vehicle is at a stoplight and the engine 13 is turned off to conserve fuel as occurs automatically in some hybrid vehicles). The MGU 916 could be used to provide a BAS drive capability to the engine 13 so that the engine 13 may be started by the MGU 916 through the endless drive member 11.

The endless drive member 11 may be a belt, or alternatively, it may be any other suitable type of endless drive member. In instances where the endless drive member 11 is a belt, it may be any suitable type of belt, such as a flat belt, a V belt, a poly-V belt, a timing belt. In instances where

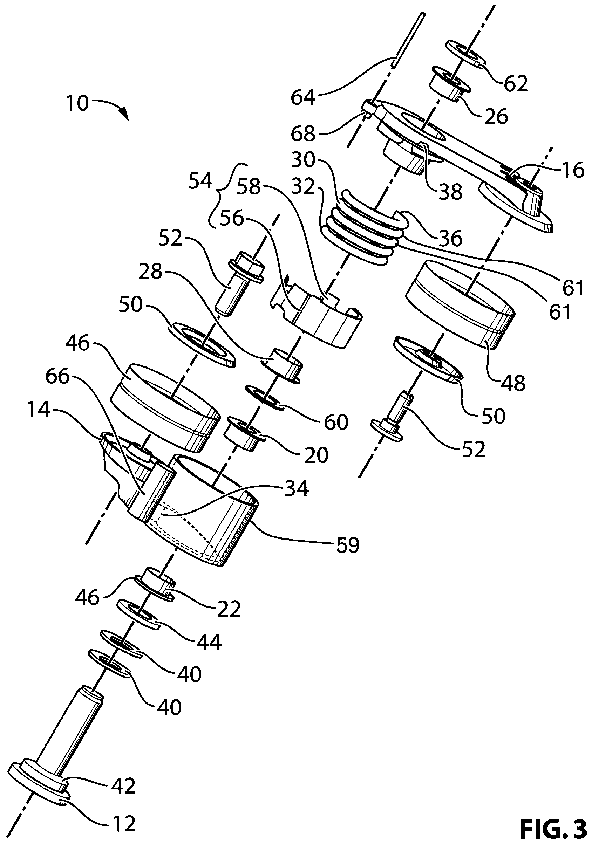

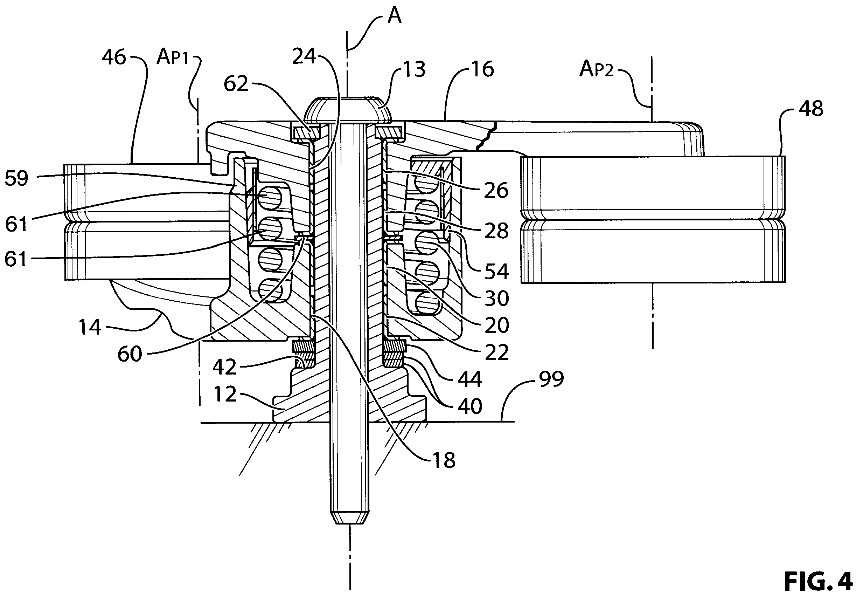

Referring to Figures 3 and 4, the tensioner 10 comprises a base 12 that is mountable to a stationary structure 99 such as an engine block. The base 12 may be in the form of a hollow shaft that defines a tensioner arm pivot axis A that has a mounting fastener (e.g. a threaded fastener) 13 that passes therethrough and that mounts into a mounting aperture (e.g. a threaded aperture) in the stationary structure 99. The tensioner 10 further includes a first tensioning arm 14 (which may be referred to as a lower tensioner arm) and a second tensioning arm 16 (which may be referred to as an upper tensioner arm). The first tensioning arm 14 is pivotably mounted to the base 12. In the example, shown the first tensioner arm 14 has a pass-through aperture 18 for mounting to the base 12. A first bushing arrangement that, in this example includes first and second lower bushings 20 and 22, extends in a radial space between the first arm aperture 18 and the outer surface of the base 12 to protect against metal-to-metal contact between the base 12 and the first arm 14. The bushings 20 and 22 may be made from any suitable material such as polyamide 4.6 or 6.6. The bushings 20 and 22 are shown to be spaced apart axially. It is alternatively possible for the bushings 20 and 22 to not be spaced apart axially. Furthermore, it is possible for the first bushing arrangement to comprise a different number of bushings, such as, for example, a single bushing.

The second tensioner arm 16 also includes a pass-through aperture 24 for pivotably mounting the second arm 16 to the base 12. A second bushing arrangement which may be similar to the first bushing arrangement (and which in this example includes first and second upper bushings 26 and 28), may be provided in the radial space between the aperture 24 and the outer surface of the base 12.

A tensioner arm biasing member 30 is provided and has a first end 32 that is engaged with a drive face 34 on the first tensioner arm 14 and a second end 36 that is engaged with a second drive face 38 on the second tensioner arm 16 so as to bias the first and second arms in respective first and second free arm directions into the belt 11. The free arm direction is the direction that the tensioner arm 14 or 16 would be moved in by the biasing member 30 if there were no belt present to resist the arm's movement. By contrast, the load stop direction is the direction the arm 16 would be moved in in if the belt tension were sufficiently high to overcome the biasing force of the biasing member 30. In general the free arm direction for a tensioner arm is a direction of movement that bring the tensioner arm into the belt, and the load stop direction is a direction of movement that brings the tensioner arm away from the belt. The tensioner arm biasing member 30 may be any suitable type of biasing member such as, for example, a torsion spring.

Each of the tensioner arms 14 and 16 has a pulley (shown at 46 and 48 respectively) rotationally mounted thereto for rotation about a pulley axis API and AP2 respectively. Each pulley 46, 48 has a dust shield 50 that assists in protecting the bearing in the pulley from dust and debris. A mounting fastener (e.g. a threaded fastener) 52 is used to mount the pulley 46, 48 to the respective tensioner arm 14, 16.

As shown in Figure 2, each pulley 46, 48 is engaged with a respective belt span 11b, 11a of the belt 11. The belt spans 11a and 11b engaged by the pulleys 46, 48 are those that are on either side of the MGU pulley 950. The tensioner 10 operates on those spans 11a and 11b to ensure that belt tension is maintained in the belt spans 11a and 11b regardless of whether the MGU 916 is being operated as a motive device to drive the belt 11 (in which case the tension in belt span 11b will be relatively high and the belt tension in belt span 11a will be relatively low), or whether the belt 11 is being driven by the engine 13 and the MGU 916 is either off or is acting as a generator.

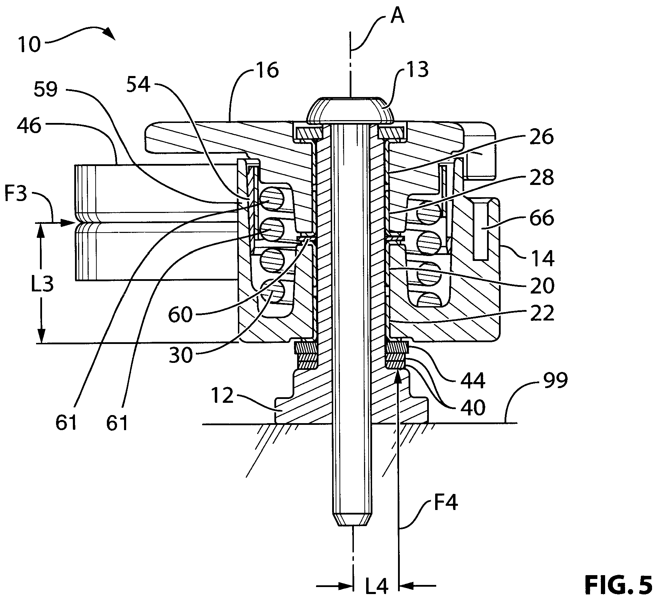

Referring to Figure 4, one or more (in this instance, two) axial preload members 40 are positioned on a shoulder 42 on the base 12, and are positioned to apply an axial biasing force on the lower tensioner arm 14, which may be referred to as an axial preload. The axial preload members 40 may be any suitable type of biasing members such as, for example, Belleville washers, which can generate large biasing forces and which are compact. The axial preload members 40 do not directly engage the arm 14; instead, a support member (e.g. a metallic disc) 44 is provided between the biasing members and the arm 14. Furthermore, the bushing 22 has a flange portion 46 that is also present between the axial preload members 40 and the arm 14, to prevent direct sliding movement between the arm 14 and the support member 44. The axial preload may be applied about the circumference of the lower arm 14, at an average radius r, as shown in Figure 5. The function of the axial preload members 40 is described further below.

A damping structure 54 that includes a polymeric (e.g. unfilled (non-reinforced) nylon) tensioner arm damping member 56 and a metallic (e.g. steel) sleeve 58 that holds the damping member 56 and protects the damping member 56 against damage from engagement with the torsion spring 30. The damping member 56 provides damping for the movement of the tensioner arm 16. The components of the tensioner arm assembly may be similar to the analogous components described in PCT publication no. WO2013/059929, the contents of which are incorporated herein in their entirety. As the torsion spring 30 expands, during movement of the tensioner arms 14 and 16 as a result of an overall increase in belt tension in the two belt spans 11a and 11b, the damping member 56 is driven against the inside wall of a cup portion 59 of the lower tensioner arm 14.

A slide disc shown at 60 is provided between a flange portion of the upper bushing 20 and a flange portion of the lower bushing 28, so as to support the rotation of the two tensioner arms 14 and 16 relative to one another. A front disc 62 is provided between the head of the fastener 13 and a flange portion of the upper bushing 26.

Referring to Figure 5, during operation, the belt 11 (Figure 2) applies a hub load shown at F3 to the first pulley 46, which results in a force on the first arm 14. This hub load F3 introduces a tipping force to the lower arm 14 that, if unaddressed can result in yaw in the lower arm 14. This can, in turn, result in noise and wear problems with the belt 11, and can furthermore cause uneven wear in the bushings 20 and 22. The uneven wear in the bushings 20 and 22 can lead to progressively increasing play between the arm 14 and the base 12 and over time, premature failure of the tensioner 10. To counteract the tipping force caused by the hub load F3, the axial preload members 40 are selected to apply a sufficiently high axial preload (shown at F4 in Figure 5) to the first arm 14 that a resulting radially directed counterforce applied to the bushings 20 and 22 from the axial preload is at least approximately as great as the bushing hub load applied to the bushings 20 and 22 as a result of the hub load F3. Because the axial preload F4 is applied about the entire circumference of the arm 14, the axial preload F4 is always positioned to counteract the bushing hub load that results from the pulley hub load F3.

In an example, the hub load F3 on the pulley 46 when the first tensioner arm 14 is at a particular position may be 395N. The bushing hub load that results from the pulley hub load F3 is determined as follows: BHL = F3 x L3 / BL, where BHL is the bushing hub load, F3 is the pulley hub load, L3 is the axial distance from the pulley hub load to the bottom of the bushings 20 and 22, and BL is the axial length of the bushings 20 and 22. In this example, F3 = 395N, L3 = 34.6mm and BL = 22mm. BHL in this example can be calculated to be 621N.

The counterforce applied to the bushings 20 and 22 that are the result of the axial preload members 40 is determined as follows: CF = F4 x L4 / (BL / 2), wherein CF is the counterforce, F4 is the axial preload, and L4 is the radius r of the axial preload. In a case where the axial preload members are selected to apply an axial preload F4 = 1000N at a radius r of 14.5mm, the resultant counterforce is 1318N. Because the counterforce exceeds the bushing hub load, no moment is introduced that causes uneven wear to the bushings 20 and 22. As a result, the bushings 20 and 22 wear evenly, which can result in a longer life for the tensioner 10. It will be noted that, while an example was described with the arm 14 at a particular position, the counterforce generated by the axial preload members 40 may be sufficiently high so that it is at least approximately as great as the bushing hub load throughout a range of positions of the tensioner arm 14 and preferably throughout substantially all of the positions that the arm 14 will move to during operation within the design conditions of the engine 13 (Figure 1).

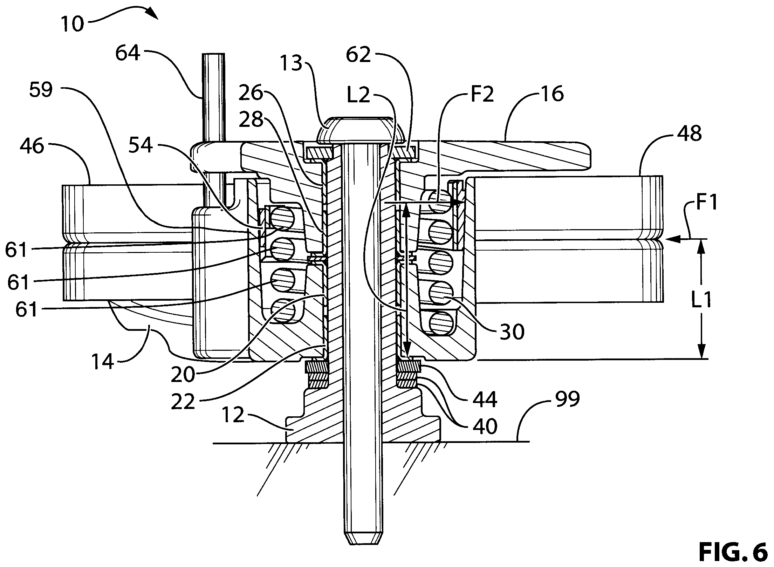

The mechanics of the upper tensioner arm 16 will now be described. The pulley hub load is shown at F1 and is in this example, 486N. The second end 34 of the spring 30 applies a force F2 on the tensioner arm 16. The second end 34 of the spring 30 may be oriented so that the force F2 is generally in the same direction as the force F1 (i.e. the forces are additive). These forces are resisted by a reaction force through the bushings 26 and 28. The centroid of the reaction force (LFR) may be determined by the formula: LFR = ((F1 x L1) + (F2 x L2)) / (F1 + F2), where L1 is the moment arm of the force F1, and L2 is the moment arm of the force F2. In an example, F1 may be 486N at a moment arm L1 of 34.6mm to a reference line. F2 is 866N at a moment arm of 41.4mm. In this example, LFR = 39mm, which as can be seen in Figure 6, is close to the center of the bushings 26 and 28, which is at 35.5mm from the reference line. Thus, the upper bushings 26 and 28, or the upper arm 16 overall, may be said to be in balance. This arrangement in relation to the upper arm 16 may be as described in PCT publication no WO2010/037232, the contents of which are incorporated herein by reference in their entirety. Providing a reaction force that is approximately centered axially on the bushings results in more even wear and a resulting longer life for the bushings 26 and 28.

As explained above, there is a force F2 that is shown to be exerted by the second end 36 of the spring 30 on the upper tensioner arm 16 in the diagram shown in Figure 6. However, as can be seen in Figure 5, there is no analogous force shown to be exerted by the first end 32 of the spring 30 on the lower tensioner arm 14. A reason there is no analogous force shown for the lower tensioner arm 14 is that the forces exerted by the spring 30 on the lower arm 14 essentially cancel out. More specifically, the coils (shown at 61) of the tensioner arm biasing member 30 expand radially proportionately to a tensioning force applied by the first and second ends 32 and 36 to the first and second tensioner arms 14 and 16. The damping structure 54 is driven to apply a frictional damping force to the first tensioner arm 14 (by engagement with the cup portion 59 of the first tensioner arm 14) that is proportional to an amount of radial expansion of the tensioner arm biasing member 30. As a result of this arrangement the tensioning force exerted by the first end 32 of the spring 30 on the lower arm 14 is substantially cancelled by a force exerted through the damping structure 54 on the cup portion 59 of the lower arm 14 from expansion of the upper coils 61 of the spring 30.

It will be noted that, while an example was described with the arm 16 at one particular position, the reaction force generated at the second bushing arrangement may be approximately centered axially along the second bushing arrangement throughout a range of positions of the tensioner arm 16.

Thus by providing both of the features described above in relation to increasing the operating life of the bushings 20 and 22, and 26 and 28, the operating life of the tensioner 10 may be longer than that of other V tensioners of the prior art.

For greater certainty, it will be noted that the benefits described above for the bushings 20 and 22, and for the bushings 26 and 28 would be applicable to first and second bushing arrangements that each only included a single bushing.

It will be noted that, in Figures 4 and 5, the lengths of the arrows representing forces F1, F2, F3 and F4 are not to be taken as being indicative of the magnitudes of the forces being represented.

An installation pin 64 may be provided which is insertable and removable from apertures 66 and 68 in the first and second tensioner arms 14 and 16 to hold the arms 14 and 16 in a certain position to facilitate installation of the belt 11. Once the belt 11 is installed, the installation pin (or more generally an arm locking member) can be removed, permitting the arms 14 and 16 to engage respective spans of the belt 11.

Those skilled in the art will appreciate that a variety of modifications may be made to the embodiments described herein without departing from the fair meaning of the accompanying claims.

**Further embodiments of the invention described herein are as follows:**
1. A tensioner for an endless drive member, comprising:
   a base that is mountable to a stationary structure, wherein the base defines a tensioner arm pivot axis;
   a first tensioner arm and a second tensioner arm, wherein the first and second tensioner arms are pivotably mounted to the base and are pivotable about the tensioner arm pivot axis;
   a first bushing arrangement that supports rotational movement of the first tensioner arm about the axis;
   a first pulley rotatably connected to the first tensioner arm for rotation about a first pulley axis, and a second pulley rotatably connected to the second tensioner arm for rotation about a second pulley axis, wherein the first and second pulleys are configured to engage the endless drive member, wherein a pulley hub load generated by the endless drive member on the first pulley results in a radially directed bushing hub load at the first bushing arrangement;
   a tensioner arm biasing member that has a first end that is engaged with the first tensioner arm and a second end that is engaged with the second tensioner arm so as to bias the first and second tensioner arms in first and second free arm directions; and
   at least one axial preload member that biases the first tensioner arm with an axial preload, wherein the axial preload generates a radially directed counterforce in the first bushing arrangement that is at least approximately as great as the bushing hub load at at least one position of the first tensioner arm.
2. A tensioner as stated in embodiment 1, wherein the bushing hub load is determined according to the formula: BHL = F3 x L3 / BL, where BHL is the bushing hub load, F3 is the pulley hub load, L3 is the axial distance from the pulley hub load to an axial end of the first bushing arrangement, and BL is the axial length of the first bushing arrangement,
   and wherein the counterforce is determined according to the formula: CF = F4 x L4 / (BL / 2), wherein CF is the counterforce, F4 is the axial preload, and L4 is the radius of the axial preload.
3. A tensioner as stated in embodiment 2, wherein the tensioner arm biasing member is a torsion spring having a plurality of coils.
4. A tensioner as stated in embodiment 3, wherein the tensioner arm biasing member expands radially proportionately to a tensioning force applied by the first and second ends to the first and second tensioner arms, wherein the tensioner further comprises a damping structure that is driven to apply a frictional damping force to the first tensioner arm that is proportional to an amount of radial expansion of the tensioner arm biasing member.
5. A tensioner as stated in embodiment 1, wherein the first bushing arrangement includes a first bushing and a second bushing that is axially spaced from the first bushing.
6. A tensioner as claimed in embodiment 1, wherein the at least one axial preload member is at least one Belleville washer.
7. A tensioner as stated in embodiment 1, wherein the at least one axial preload member is a plurality of Belleville washers.
8. A tensioner as stated in embodiment 1, wherein a second bushing arrangement that supports rotational movement of the second tensioner arm about the axis,
   and wherein the second end of the tensioner arm biasing member is positioned such that a hub load on the second pulley, when added to the biasing force exerted by the second end of the tensioner arm biasing member, generates a reaction force between the second bushing arrangement on the second tensioner arm that is approximately axially centered on the second bushing arrangement, at at least one position of the second tensioner arm.

## Claims

1. An endless drive arrangement, comprising:
an endless drive member (11), and
a tensioner (10) tensioning the endless drive member (11), the tensioner (10) comprising:
a base (12) that is mountable to a stationary structure (99), wherein the base (12) defines a tensioner arm pivot axis (A);
a first tensioner arm (14) and a second tensioner arm (16), wherein the first and second tensioner arms (14, 16) are pivotably mounted to the base (12) and are pivotable about the tensioner arm pivot axis (A);
a first bushing arrangement (20, 22) that supports rotational movement of the first tensioner arm (14) about the axis (A);
a first pulley (46) rotatably connected to the first tensioner arm (14) for rotation about a first pulley axis (AP1),
and a second pulley (48) rotatably connected to the second tensioner arm (16) for rotation about a second pulley axis (AP2) , wherein the first and second pulleys (46, 48) are configured to engage the endless drive member (11), wherein a pulley hub load (F3) generated by the endless drive member (11) on the first pulley (46) results in a radially directed bushing hub load (BHL) at the first bushing arrangement (20, 22);
a tensioner arm biasing member (30) that has a first end (32) that is engaged with the first tensioner arm (14) and a second end (36) that is engaged with the second tensioner arm (16) so as to bias the first and second tensioner arms (14, 16) in first and second free arm directions into the endless drive member (11); and
at least one axial preload member (40) that biases the first tensioner arm (14) with an axial preload, wherein the at least one axial preload member (40) is selected to apply a sufficiently high axial preload to the first tensioner arm (14) that the axial preload results in a radially directed counterforce (CF) in the first bushing arrangement (20, 22) that is at least as great as the bushing hub load (BHL) at at least one position of the first tensioner arm (14).

2. An endless drive arrangement as claimed in claim 1, wherein the bushing hub load (BHL) is determined according to the formula: BHL = F3 x L3 / BL, where BHL is the bushing hub load, F3 is the pulley hub load, L3 is the axial distance from the pulley hub load (F3) to an axial end of the first bushing arrangement (20, 22), and BL is the axial length of the first bushing arrangement (20, 22),
and wherein the counterforce (CF) is determined according to the formula: CF = F4 x L4 / (BL / 2), wherein CF is the counterforce, F4 is the axial preload, and L4 is the radius of the axial preload.

3. An endless drive arrangement as claimed in one of the preceding claims, wherein the tensioner arm biasing member (30) is a torsion spring having a plurality of coils.

4. An endless drive arrangement as claimed in one of the preceding claims, wherein the tensioner arm biasing member (30) expands radially proportionately to a tensioning force applied by the first and second ends (32, 36) to the first and second tensioner arms (14, 16), wherein the tensioner (10) further comprises a damping structure (54) that is driven to apply a frictional damping force to the first tensioner arm (14) that is proportional to an amount of radial expansion of the tensioner arm biasing member (30).

5. An endless drive arrangement as claimed in one of the preceding claims, wherein the first bushing arrangement (20, 22) includes a first bushing (20) and a second bushing (22) that is axially spaced from the first bushing (20).

6. An endless drive arrangement as claimed in one of the preceding claims, wherein the axial preload is applied about the entire circumference of the first tensioner arm (14).

7. An endless drive arrangement as claimed in one of the preceding claims, wherein the at least one axial preload member (40) is at least one Belleville washer.

8. An endless drive arrangement as claimed in one of claims 1 to 6, wherein the at least one axial preload member (40) is a plurality of Belleville washers.

9. An endless drive arrangement as claimed in one of the preceding claims, wherein a second bushing arrangement (26, 28) supports rotational movement of the second tensioner arm (16) about the axis (A),
and wherein the second end (36) of the tensioner arm biasing member (30) is positioned such that a hub load on the second pulley (48), when added to the biasing force exerted by the second end (36) of the tensioner arm biasing member (30), results in a reaction force between the second bushing arrangement (26, 28) on the second tensioner arm (16) that is axially centered on the second bushing arrangement (26, 28), at at least one position of the second tensioner arm (16).

10. An endless drive arrangement as claimed in one of the preceding claims, wherein the at least one axial preload member (40) is selected to apply a sufficiently high axial preload to the first tensioner arm (14) that the axial preload results in a radially directed counterforce (CF) in the first bushing arrangement (20, 22) that is at least as great as the bushing hub load (BHL) at any position of the first tensioner arm (14).

11. An endless drive arrangement as claimed in one of the preceding claims, wherein the tensioner arm biasing member (30) biases the first and second tensioner arms (14, 16) towards each other.
